# FASCICULE DE BREVET EUROPEEN

(11) **EP 1 941 208 B1**
(45) Date de publication et mention de la délivrance du brevet: **17.12.2008**
(21) Numéro de dépôt: 06820195.3
(22) Date de dépôt: 04.10.2006
(51) Int. Cl.: F23J 15/06, F23L 7/00, B01D 53/00, F04D 31/00, F17C 1/00

(54) **PROCEDE D'OXY-COMBUSTION PERMETTANT LA CAPTURE DE LA TOTALITE DU DIOXYDE DE CARBONE PRODUIT**
SAUERSTOFFVERBRENNUNGSVERFAHREN, BEI DEM SÄMTLICHES ERZEUGTES KOHLENDIOXID AUFGEFANGEN WERDEN KANN
OXYCOMBUSTION METHOD IN WHICH ALL OF THE CARBON DIOXIDE PRODUCED CAN BE CAPTURED

(30) Priorité: 04.10.2005 FR 0510100
(43) Date de publication de la demande: 09.07.2008
(73) Titulaire: Institut Français du Pétrole, 92852 Rueil Malmaison Cedex (FR)
(72) Inventeur: VILAGINES, Régis, 69390 MILLERY (FR); BURKHARDT, Thorsten, 81737 Munich (FR); FALCIMAIGNE, Jean, F-92270 Bois Colombes (FR); BROUTIN, Paul, F-69630 Chaponost (FR)
(86) Numéro de dépôt international: PCT/FR2006/002294
(87) Numéro de publication internationale: WO 2007/039687

(56) Documents cités:
- WO-A-02/084177
- FR-A- 2 788 815
- US-A- 5 732 571
- US-A1- 2003 022 324
- US-B1- 6 505 567

## Description

La présente invention concerne un procédé de production d'énergie à partir de combustible fossile avec capture du dioxyde de carbone en vue de le séquestrer.

La combustion des ressources fossiles de pétrole, de gaz naturel, ou de charbon, produit en contrepartie du dioxyde de carbone, qui s'accumule ensuite dans l'atmosphère. Or le dioxyde de carbone est le principal des gaz dits à « effet de serre ». Il empêche le rayonnement infrarouge solaire de repartir vers l'espace, contribuant ainsi à réchauffer la surface de la terre dans des proportions qui pourraient s'avérer bien plus importantes que tout ce qui a été observé jusqu'à présent au cours des temps géologiques.
Comme il ne semble pas possible dans un avenir prévisible de se passer des combustibles fossiles pour l'approvisionnement des économies, un grand nombre d'actions sont envisagées ou engagées pour essayer de diminuer les quantités de CO₂ libérées dans l'atmosphère ou d'en diminuer les effets.

La présente invention a pour but de proposer un procédé de combustion permettant de capturer le CO₂ en vue de l'injecter dans des couches géologiques adéquates (anciens gisements pétroliers ou gaziers, aquifères salins étanches, mines de charbon...).

Le document FR 2 872 566 propose un procédé de combustion qui permet notamment de réaliser la liquéfaction totale du dioxyde de carbone capturé à température ambiante. La réalisation de la liquéfaction totale du CO₂ impose de limiter la teneur des composés inertes présents dans le CO₂ produit. Dans ce procédé, le taux de capture maximum du CO₂ dépend essentiellement de la proportion de gaz inertes présents dans les fumées de la combustion. Afin de limiter au mieux la quantité de gaz inertes dans les fumées pour ne pas pénaliser le rendement de capture du CO₂, ce procédé doit fonctionner préférentiellement avec une chambre de combustion maintenue constamment en légère surpression par rapport à l'extérieur, il doit également fonctionner préférentiellement avec une unité de production d'oxygène capable de fournir de l'oxygène pur à plus de 98 % .

La présente invention propose un procédé d'oxycombustion avec capture du CO₂ dans lequel la teneur en inertes dans le CO₂ n'est pas contraignante. Selon l'invention, il n'est pas nécessaire de liquéfier totalement le CO₂ avant transport : le transport du CO₂ est effectué après compression polyphasique qui permet de traiter un flux de CO₂ comportant une part significative de composés inertes.

De manière générale, la présente invention concerne un procédé de combustion avec capture du dioxyde de carbone, dans lequel on effectue au moins les étapes suivantes :
a) on mélange un flux riche en oxygène avec un flux riche en dioxyde de carbone pour former un mélange,
b) on brûle un combustible avec ledit mélange,
c) on traite les fumées de combustion pour condenser l'eau et entraîner des composés soufrés, et
d) on liquéfie partiellement au moins une partie des fumées traitées obtenues à l'étape c), par compression à une pression comprise entre 40 et 70 bars absolus et par refroidissement à une température supérieure à 0°C, de manière à obtenir des fumées partiellement liquéfiées comportant au moins 8% volumique de liquide,
e) on comprime au moyen d'au moins une pompe polyphasique les fumées partiellement liquéfiées obtenue à l'étape d) de manière à obtenir un flux comprimé.

Selon l'invention, une partie des fumées traitées obtenues à l'étape c) peut être utilisée pour être mélangée avec le flux riche en oxygène à l'étape a). A l'étape d), la liquéfaction partielle des fumées traitées peut être réalisée par au moins une compression des fumées à une pression comprise entre 50 et 70 bars et par refroidissement des fumées comprimées à une température comprise entre 0°C et 40°C.

Selon l'invention, on peut, en outre, effectuer les opérations suivantes :
- on détend une partie du flux comprimé obtenu à l'étape e), puis
- on recycle ladite partie de flux en ajoutant ladite partie de flux détendu aux fumées partiellement liquéfiées obtenues à l'étape c), avant compression par la pompe polyphasique.
De plus, on peut refroidir par échange de chaleur ladite partie de flux comprimé avant d'effectuer la détente.

Selon l'invention, on peut injecter les fumées comprimées dans un réservoir souterrain. Les fumées comprimées obtenues à l'étape e) peuvent être transportées, puis injectées et séquestrées dans un réservoir souterrain. Alternativement les fumées comprimées obtenues à l'étape e) peuvent être transportées, puis injectées dans un réservoir souterrain d'hydrocarbures en production afin d'améliorer la récupération d'hydrocarbures.

La pompe polyphasique peut être une pompe rotodynamique hélico-axial, comportant au moins une cellule de compression montée sur un même arbre et dont la géométrie est adaptée au pompage des mélanges d'une phase gazeuse et d'au moins une phase liquide. Plus précisément, la pompe polyphasique peut comporter au moins une cellule de compression adaptée au pompage des mélanges d'une phase gazeuse et d'au moins une phase liquide, associée à au moins une cellule de compression classiquement utilisée pour le pompage ou la compression de fluides constitués d'une seule phase.

Le principal avantage du procédé selon l'invention est de permettre la capture de la totalité du CO₂ issu de la combustion, c'est-à-dire un rendement de capture du CO₂ de 100 pour cent.

Le procédé selon l'invention permet de transporter jusqu'à son lieu de stockage le CO₂ produit par une installation d'oxycombustion et ce quelle que soit sa pureté et en particulier sa teneur en inertes dont azote, argon et oxygène.

Mais d'autres avantages peuvent être procurés par la présente invention en comparaison avec le procédé décrit dans le document FR 2 872 566 :
- une augmentation du rendement énergétique global de l'unité de traitement du CO₂,
- un abaissement du coût de l'investissement total,
- un abaissement des coûts d'exploitation,
- un risque industriel et environnemental diminué.

D'autres caractéristiques et avantages de l'invention seront mieux compris et apparaîtront clairement à la lecture de la description faite ci-après en se référant aux dessins parmi lesquels :
- la figure 1 schématise une installation de combustion avec capture des fumées,
- la figure 2 représente de manière détaillée la liquéfaction des fumées.

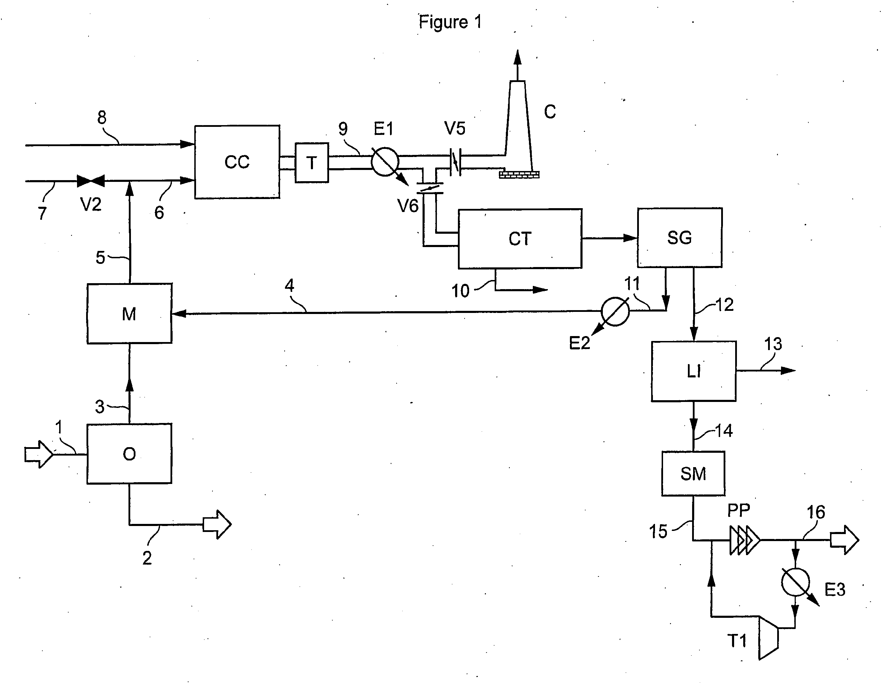

L'installation de combustion représentée par la figure 1 peut être mise en oeuvre dans différentes industries. Par exemple l'installation de combustion est une installation de production de vapeur et d'électricité, un four de raffinerie ou de pétrochimie. L'installation peut, par exemple, être un four de vaporéformage ce qui permet d'avoir un procédé de production d'hydrogène avec capture et stockage du CO₂. L'installation de combustion peut également être un four de cimenterie ou un haut-fourneau à l'oxygène utilisé notamment dans l'industrie sidérurgique.

Sur la figure 1, de l'air est introduit par le conduit 1 dans l'unité O de production d'oxygène. L'azote est évacué de l'unité O par le conduit 2 et peut être rejeté à l'atmosphère à une température proche de la température ambiante. Il peut être réalisé une intégration thermique de l'unité O avec l'unité LI de liquéfaction du CO₂: les frigories récupérées sur le circuit de rejet de l'azote peuvent être utilisées lors de la liquéfaction partielle du CO₂. L'unité O produit de l'oxygène pur à 95 % en volume, en général.

L'oxygène produit par l'unité O est envoyé par le conduit 3 dans le mélangeur gaz/gaz M pour être mélangé avec le CO₂ arrivant par le conduit 4. Ainsi, le mélangeur M permet de reconstituer un comburant équivalent à l'air par dilution de l'oxygène provenant de l'unité O.

Le mélange d'oxygène et de CO₂ est évacué du mélangeur M par le conduit 5.

Alternativement, l'unité O de production d'oxygène et le mélangeur M peuvent être regroupés en un organe unique. Cet organe peut être un séparateur membranaire dans lequel l'oxygène est séparé de l'air à travers une membrane. L'air circule d'un côté de la membrane, l'autre côté vers lequel migre l'oxygène étant en contact avec du CO₂ gazeux en circulation. L'oxygène se trouve alors directement incorporé dans le CO₂ qui sert de gaz de balayage.

La chambre de combustion CC est alimentée en comburant par le conduit 6 et en combustible par le conduit 8.

Le combustible est un combustible d'origine fossile. Par exemple, on peut utiliser du gaz naturel, du fioul liquide, du charbon, du coke de pétrole, ou un mélange de ces combustibles fossiles.

Les débits de combustible et de comburant circulant dans les conduits 6 et 8 sont contrôlés et ajustés pour réaliser une combustion avec un excès d'oxygène.

En fonctionnement normal de l'installation de combustion, la vanne V2 est fermée et le comburant arrivant par le conduit 6 est le mélange d'oxygène et de CO₂ produit par le mélangeur M. Lorsqu'on ouvre la vanne V2, on alimente la chambre de combustion CC en air arrivant par le conduit 7 ce qui permet de revenir à une combustion sous air en cas de problème sur l'unité O de production d'oxygène ou le conditionnement et transport du CO₂ vers le stockage souterrain.

La chambre de combustion CC est constituée d'une enveloppe métallique, couramment appelée « casing », cette enveloppe étant doublée de matériau réfractaire à la chaleur. De plus, la chambre de combustion comporte un ou plusieurs brûleurs, ainsi que des tubes dans lesquels circule le fluide à chauffer. Ce fluide peut être de l'eau de chaudière qui se transforme en vapeur (cas d'un générateur de vapeur et/ou d'électricité), un mélange d'hydrocarbures dans le cas d'un four de raffinerie, un mélange d'hydrocarbures et de vapeur d'eau dans le cas d'un four de vaporéformage.

Les fumées produites par la combustion réalisée dans la chambre CC peuvent subir, dans l'unité T, des traitements de dépoussiérage et d'enlèvement des oxydes d'azote et/ou de soufre. Pour le dépoussiérage, on utilise de préférence des filtres électrostatiques. Certains traitements peuvent être réalisés dans la chambre de combustion CC. Par exemple, dans le cas d'utilisation de combustible à forte teneur en soufre, l'injection de calcaire dans la chambre CC permet une première réduction de la teneur en oxyde de soufre qui est en général suivie d'une seconde étape de désulfuration sur les fumées sortant de la chambre de combustion.

Puis, les fumées sont évacuées par le conduit 9 et l'extracteur E1.

Ensuite, le chemin suivi par les fumées est déterminé par les vannes ou registres V5 et V6, c'est-à-dire par des moyens permettant de contrôler le débit des fumées dans les conduits.

Lorsque le registre V6 est fermé et le registre V5 est ouvert, les fumées sont libérées dans l'atmosphère par la cheminée C. Ce fonctionnement est privilégié lorsque la combustion est réalisée à l'air, notamment dans les phases d'arrêt ou démarrage de l'installation ou en cas de problème prolongé sur l'unité O de production d'oxygène ou sur l'unité de traitement et de transport du CO₂ vers le stockage.

Lorsque le registre V6 est ouvert et le registre V5 est fermé, les fumées sont introduites dans l'unité CT de condensation de l'eau. L'unité CT refroidit les fumées. L'eau condensée entraîne également les composés soufrés et les poussières qui n'auraient pas été éliminés dans l'unité de traitement T. Le condensat d'eau et de composés soufrés est évacué par le conduit 10 vers une unité de traitement de l'eau et des composés soufrés.

Les fumées désulfurées et débarrassées de l'eau condensée sont stockées dans le ballon SG.

Une partie des fumées contenues dans le réservoir SG est soutirée par le conduit 11 et l'extracteur E2, puis est recyclée par le conduit 4 dans le mélangeur M ce qui permet de reconstituer un comburant. Une autre partie des fumées contenue dans le ballon SG est introduite par le conduit 12 et partiellement liquéfiée dans l'unité de liquéfaction LI. En fonctionnement stabilisé, le débit de CO₂ entrant dans l'unité LI correspond au débit de CO₂ produit par la combustion. La liquéfaction partielle est réalisée par une succession d'étapes de compression et de refroidissement.

Entre deux étapes de compression, le CO₂ a subi un refroidissement entre la température atteinte en fin de compression jusqu'à une température proche de la température ambiante. Le refroidissement peut être effectué par échange de chaleur avec de l'air, de l'eau, ou un autre fluide réfrigérant. En particulier, le refroidissement peut être effectué en utilisant les frigories obtenues lors de la détente de l'azote du conduit 2 produit par l'unité O. Lors de la liquéfaction du CO₂, l'eau recueillie lors des refroidissements successifs après chaque étape de compression peut être évacuée par le conduit 13.

A l'état final, le CO₂ est sous haute pression (entre 40 bars, éventuellement 50 bars et son point critique, de préférence entre 50 bars et 70 bars absolu) et à basse température (supérieure à 0°C, de préférence entre 0 et 40°C), de préférence à 10°C. Du fait de la présence d'inertes, il n'est pas possible de liquéfier totalement la phase gazeuse. Il faudrait une pureté d'au moins 95 % vol. de CO₂ pour n'avoir qu'une phase liquide alors que les installations d'oxycombustion produisent en général un CO₂ avec une pureté maxi de 90 % vol. Dans ce cas, comme cela est illustré dans l'exemple numérique présenté ci-après, on obtient après séparation, deux phases :
- une phase gaz contenant pratiquement tous les inertes et une partie de CO₂ (de 40 à 60 % vol.),
- une phase liquide contenant le reste du CO₂.

Le CO₂ partiellement liquéfié dans l'unité LI et les inertes sont introduits par le conduit 14 dans le ballon de stockage SM. Le mélange dans le ballon SM est à une pression comprise entre 40 bars et 70 bars et à une température supérieure à 0°C. Selon l'invention, on impose à l'unité LI de produire un flux dans le conduit 14 comportant au moins 8 % volumique de liquide afin d'assurer le bon fonctionnement de la pompe polyphasique PP qui nécessite un minimum de liquide à l'entrée.

Ce mélange contenu dans le ballon de stockage SM peut être destiné à la séquestration dans un réservoir souterrain, par exemple dans des anciens gisements pétroliers ou gaziers, dans des aquifères salins étanches, ou dans des mines de charbon. Il peut être aussi injecté dans un gisement d'hydrocarbures, par exemple de pétrole ou de gaz, en fin de vie afin de faire de la récupération assistée. Le mélange est évacué du ballon SM par le conduit 15, puis est convoyé après compression polyphasique jusque dans le réservoir, par exemple par circulation dans le conduit 16.

Dans la présente invention, il est proposé de comprimer le mélange biphasique obtenu au moyen d'une pompe polyphasique PP, au moins. Il pourra être utilisé plusieurs pompes en parallèle ou en série. L'utilisation de la pompe polyphasique permet de traiter un mélange biphasique. Cela évite de refroidir à très basse température (inférieure à 0°C) les fumées avant compression polyphasique comme cela est le cas, par exemple, dans le document WO-02/084177-A. C'est intéressant du point de vue de la consommation énergétique et du coût des installations. De plus, on peut traiter l'intégralité des fumées de combustion, c'est-à-dire le CO₂ et les composés inertes, sans avoir à effectuer une opération de séparation pour relâcher une portion des fumées enrichie en composés inertes.

La ou les pompes polyphasiques utilisées sont de préférence des pompes polyphasiques de type rotodynamique hélico-axial compte tenu des conditions de pression, de température et de débits volumiques des fumées généralement rencontrées dans les installations industrielles d'oxycombustion, mais on ne sort pas du domaine de l'invention si d'autres types de pompes polyphasiques sont utilisés, comme par exemple des pompes polyphasiques volumétriques à vis multiples.

Les pompes polyphasiques de type rotodynamique hélico-axial sont constituées d'un ou plusieurs étages de compression fixés sur un même arbre et dont la géométrie est adaptée au pompage des mélanges d'une phase gaz et d'au moins une phase liquide. La géométrie de telles cellules et notamment décrite dans le document FR 2 665 224 ou dans le document GB 2 287 288, cette liste n'étant pas limitative et citée uniquement à titre d'exemples de réalisations possibles pour la pompe polyphasiques.

La pompe polyphasique peut également être constituée d'un ou plusieurs étages polyphasiques suivis d'un ou plusieurs étages non hélico-axiaux, tels que des étages de géométrie radiale ou semi-radiale habituellement utilisés sur les pompes centrifuges pour liquide monophasique. Le document FR 2 748 532 décrit une telle association, particulièrement avantageuse pour le présent procédé s'il faut élever la pression au dessus de celle où le mélange n'est plus constitué que d'une ou plusieurs phases liquides ou d'une seule phase dense.

Le CO₂ peut être comprimé jusqu'à sa pression d'injection dans le réservoir souterrain où il sera piégé. En général, la pression d'injection est comprise entre 80 et 300 bars, et de préférence entre 100 et 120 bars. Pour connaitre la pression au refoulement de la pompe polyphasique, il faut comme dans l'exemple numérique, présenté ci-après, tenir compte des hauteurs statiques et des pertes de charges dans les lignes de transport et dans le puits.

Avantageusement, on peut disposer une boucle de recyclage du CO₂ autour de la pompe polyphasique PP. Une partie du flux de CO₂ sous pression refoulé par la pompe PP est refroidi dans l'échangeur de chaleur E3, par exemple jusqu'à une température comprise entre 0°C et 40°C. De préférence la partie de flux de CO₂ sous pression est refroidie par échange de chaleur avec un fluide ambiant, par exemple de l'air ou de l'eau. Ce flux réfrigéré est ensuite détendu dans l'organe de détente T1 jusqu'à une pression proche de la pression d'admission de la pompe PP, par exemple comprise entre 40 bars et 70 bars. Le flux détendu est recyclé à l'admission de la pompe en étant mélangé avec le CO₂ partiellement liquéfié circulant dans le conduit 15.

L'organe de détente T1 peut être une vanne de détente ou bien une turbine de détente diphasique. Dans le cas de l'utilisation d'une turbine, on peut récupérer l'énergie de détente pour entraîner la pompe PP, par exemple en montant la turbine T1 et la pompe PP sur le même arbre.

La boucle de recyclage du CO₂ autour de la pompe polyphasique PP présente, d'une part, l'avantage de protéger la pompe PP vis-à-vis d'une instabilité de fonctionnement par insuffisance de débit. D'autre part, en abaissant la température du flux en entrée de la pompe PP, cette boucle permet d'augmenter la proportion liquide/gaz en entrée de la pompe et, ainsi, les performances de la pompe PP en sont améliorées.

En fonctionnement normal ou stabilisé, le mélangeur M fournit à la chambre CC un mélange d'oxygène provenant de l'unité O et de CO₂ provenant du ballon de stockage SG. La chambre CC est alimentée en comburant provenant du mélangeur M et en combustible arrivant par le conduit 8. Les fumées de combustion sont intégralement dirigées dans les unités de traitement T et de condensation CT de l'eau, puis introduites dans le ballon de stockage SG. Une partie du CO₂ contenu dans le ballon SG est introduite dans le mélangeur M. Une autre partie du CO₂ contenu dans le ballon SG est partiellement liquéfiée dans l'unité de liquéfaction LI, puis stockée dans le ballon SM, comprimée en phase mixte et enfin évacuée par le conduit 15 pour être stockée dans un réservoir souterrain.

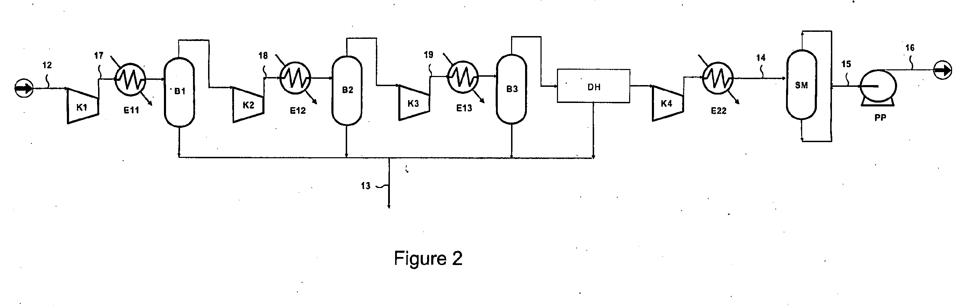

La figure 2 représente de manière détaillée l'étape de liquéfaction partielle des fumées de combustion. Les références de la figure 2 identiques aux références de la figure 1 désignent les mêmes éléments.

La liquéfaction des fumées est réalisée par plusieurs compressions successives dans les différents étages K1, K2, K3 et K4 d'un compresseur et par refroidissement dans les échangeurs de chaleur E11, E12, E13 et E14. Après compression dans un des étages K1 à K3, les fumées sont refroidies par échange de chaleur, en général avec de l'eau, dans E1 à E3 pour atteindre une température inférieure à 50°C, en général environ égale à 40°C. Le refroidissement provoque la condensation d'eau qui est récupérée en fond des ballons B1 à B3. Le gaz issu en tête de B1 à B3 est envoyé à l'étage de compression suivant.

Les fumées évacuées en tête du ballon B3 peuvent subir un traitement de déshydratation dans l'unité DH. Par exemple, DH met en oeuvre un procédé au glycol.

Les flux d'eau récupérés en fond des ballons B1 à B3 et éventuellement de DH sont évacués par le conduit 13.

Les fumées évacuées en tête du ballon B3 éventuellement traitées dans DH sont comprimées par l'étage de compression K4, puis envoyées par le conduit 14 dans le ballon SM.

Selon l'invention, on détermine le taux de compression de K1 à K4 et la température de refroidissement de E22 de manière à obtenir dans le conduit 14 un flux partiellement liquéfié comportant au moins 8 % de liquide. De plus, pour éviter d'utiliser des cycles de réfrigération coûteux en énergie, on refroidit les fumées par échange de chaleur dans E11, E12, E13 et E22 avec un fluide ambiant, par exemple de l'eau ou de l'air, à une température supérieure à 0°C, de préférence à une température comprise entre 0°C et 40°C.

Ainsi, la présente invention permet de capturer et de séquestrer la totalité du CO₂ issu de la chambre de combustion CC.

L'installation de combustion selon l'invention peut être mise en oeuvre en utilisant une chambre de combustion et une cheminée déjà existante. Cette opération, couramment appelée remodelage ou « revamping », permet de réutiliser des installations existantes qui sont coûteuses en investissement, dans un contexte de capture du CO₂. Ce type d'opération est rendue possible par le procédé selon l'invention car il ne nécessite pas de pressuriser la chambre de combustion CC.

Les différents avantages de la présente invention apparaîtront plus clairement à la lecture de l'exemple numérique, exposé ci-après, de l'application du schéma décrit en référence à la figure 1, avec une unité de liquéfaction telle que représenté par la figure 2.

Dans l'exemple d'application on considère le cas d'une oxy-chaudière de 450 MWatts nets, produisant 470 tonnes par heure de CO₂ mélangé à des impuretés et des gaz inertes dans les proportions massiques suivantes :
- Dioxyde de carbone C0₂: 91,13 %
- Eau H₂O: 1,33 %
- Azote N₂: 1,84 %
- Oxygène O₂: 2,20 %
- Argon Ar : 3,34 %
- autres dont SO₂: 0,16 %

Le gaz est comprimé jusqu'à 50 bar au travers de quatre étages de compression K1 à K4, avec refroidissement intermédiaire dans E11 à E13 à température ambiante, de préférence entre 0°C et 40°C.

Le tableau ci-dessous indique les conditions thermodynamiques du gaz lors de la compression :

| Repères | 12 | 17 | 18 | 19 | 14 |
|---|---|---|---|---|---|
| Pression (kPa) | 101 | 350 | 970 | 2700 | 5000 |
| Température (°C) | 25 | 145 | 145 | 145 | 6 |

Le tableau ci-dessous indique les puissances requises par les différents étages de compression K1 à K4 :

| Repères | K1 | K2 | K3 | K4 |
|---|---|---|---|---|
| Puissance (MW) | 15.5 | 13.4 | 12.8 | 6 |

En sortie de K4, le mélange gazeux est partiellement liquéfié par refroidissement à 6°C de manière à obtenir 9,8% volumique de liquide.

Dans cet exemple, la pompe polyphasique est conçue pour élever la pression du mélange de 50 bars à 100 bars. De préférence, la phase eau H₂O est retirée du mélange préalablement à la compression, au moyen d'une unité de déshydratation DH en amont de la pompe polyphasique.

Pour obtenir cette élévation de pression avec le débit total considéré, une seule pompe polyphasique de type hélico-axial peut convenir. Cette pompe est constituée de 10 étages de compression montés en série sur un même arbre et comprenant une partie tournante solidaire de l'arbre en rotation, appelée rotor, et une partie fixe, appelée stator, qui redresse l'écoulement. Pour cette application, les calculs de pré-dimensionnement de la pompe conduisent à un diamètre extérieur du rotor de 460 mm et à une vitesse de rotation du rotor de 3600 tours par minute. La pompe polyphasique est constituée de deux séries de cellules de compression, une première série de 4 cellules successives précède une deuxième série de 6 cellules. La géométrie de chaque cellule de compression est identique dans une même série. Le choix de deux séries distinctes de cellules dans la pompe est destiné à ajuster la géométrie des cellules de compression aux caractéristiques de l'écoulement à travers la pompe afin d'optimiser les performances hydrauliques de la machine pour l'application considérée. Dans cette pompe, il n'est pas nécessaire d'utiliser une cellule de géométrie différente pour chaque étage de compression comme sur les turbines ou les compresseurs axiaux.

La puissance motrice nécessaire sur l'arbre de cette pompe est d'environ 5100 kWatts.

Pour cet exemple, l'évolution des caractéristiques thermodynamiques du mélange comprimé à travers la pompe est indiquée dans le tableau ci-après :

| | Unité | entrée pompe | entrée ét. 3 | entrée ét. 5 | entrée ét. 7 | entrée ét. 9 | sortie pompe |
|---|---|---|---|---|---|---|---|
| Pression | bar a. | 50,0 | 56,7 | 64,4 | 73,9 | 86,2 | 100,6 |
| Température | °C | 6,0 | 10,9 | 16,0 | 21,7 | 30,7 | 41,7 |
| Débit gaz | m³/h | 2282 | 1986 | 1729 | 1538 | 1567 | 1503 |
| Masse volumique gaz | kg/m³ | 144 | 172 | 210 | 271 | 325 | 339 |
| Débit liquide | m³/h | 200 | 192 | 172 | 115 | 6,8 | 6,8 |
| Masse volumique liquide | kg/m³ | 932 | 909 | 886 | 862 | 995 | 991 |
| Débit total gaz + liquide | m³/h | 2483 | 2178 | 1901 | 1653 | 1574 | 1510 |
| Masse volumique moyenne | kg/m³ | 208 | 237 | 271 | 312 | 328 | 342 |
| Fraction volumique de gaz | | 0,919 | 0,912 | 0,910 | 0,931 | 0,996 | 0,995 |
| Rapport volumique Gaz/Liquide | m³/m³ | 11,4 | 10,4 | 10,1 | 13,4 | note | note |

| | | | | | | | |
|---|---|---|---|---|---|---|---|
| Note : non significatif, le domaine de la phase dense étant atteint | | | | | | | |

Cet exemple montre que la compression en phase mixte permet d'obtenir le niveau de pression d'injection souhaité (ici 100 bars) pour la totalité du débit des résidus de combustion d'une oxy-chaudière de 450 MWatts, soit environ 516 tonnes par heure. Le traitement de ce débit est possible avec une seule pompe polyphasique à 10 étages et nécessite une puissance motrice inférieure ou égale à la puissance habituellement consommée par une unité de traitement du CO₂ par liquéfaction, séparation gaz/liquide et pompage équivalente.

En traitant la totalité du débit de CO₂ et des inertes, le procédé selon l'invention permet aussi l'économie d'un équipement de séparation gaz/liquide.

## Revendications

1. Procédé de combustion avec capture du dioxyde de carbone, dans lequel on effectue au moins les étapes suivantes :
a) on mélange un flux riche en oxygène avec un flux riche en dioxyde de carbone pour former un mélange,
b) on brûle un combustible avec ledit mélange,
c) on traite les fumées de combustion pour condenser l'eau et entraîner des composés soufrés, et
d) on liquéfie partiellement au moins une partie des fumées traitées obtenues à l'étape c), par compression à une pression comprise entre 40 et 70 bars absolus et par refroidissement à une température supérieure à 0°C, de manière à obtenir des fumées partiellement liquéfiées comportant au moins 8% volumique de liquide,
e) on comprime au moyen d'au moins une pompe polyphasique les fumées partiellement liquéfiées obtenue à l'étape d) de manière à obtenir un flux comprimé.

2. Procédé selon la revendication 1, dans lequel une partie des fumées traitées obtenues à l'étape c) est utilisée pour être mélangée avec le flux riche en oxygène à l'étape a).

3. Procédé selon l'une des revendications 1 et 2, dans lequel, à l'étape d), la liquéfaction partielle des fumées traitées est réalisée par au moins une compression des fumées à une pression comprise entre 50 et 70 bars et par refroidissement des fumées comprimées à une température comprise entre 0°C et 40°C.

4. Procédé selon l'une des revendications 1 à 3, dans lequel on effectue les opérations suivantes :
- on détend une partie du flux comprimé obtenu à l'étape e), puis
- on recycle ladite partie de flux en ajoutant ladite partie de flux détendu aux fumées partiellement liquéfiées obtenues à l'étape c), avant compression par la pompe polyphasique.

5. Procédé selon la revendication 4, dans lequel on refroidit par échange de chaleur ladite partie de flux comprimé avant d'effectuer la détente.

6. Procédé selon l'une des revendications 1 à 5, dans lequel, on injecte les fumées comprimées dans un réservoir souterrain.

7. Procédé selon la revendication 6, dans lequel les fumées comprimées obtenues à l'étape e) sont transportées, puis injectées et séquestrées dans un réservoir souterrain.

8. Procédé selon la revendication 6, dans lequel les fumées comprimées obtenues à l'étape e) sont transportées, puis injectées dans un réservoir souterrain d'hydrocarbures en production afin d'améliorer la récupération d'hydrocarbures.

9. Procédé selon l'une des revendications précédentes, dans lequel la pompe polyphasiques est une pompe rotodynamique hélico-axial, comportant au moins une cellule de compression montées sur un même arbre et dont la géométrie est adaptée au pompage des mélanges d'une phase gazeuse et d'au moins une phase liquide.

10. Procédé selon l'une des revendications 1 à 9 dans lequel la pompe polyphasique comporte au moins une cellule de compression adaptée au pompage des mélanges d'une phase gazeuse et d'au moins une phase liquide, associée à au moins une cellule de compression classiquement utilisée pour le pompage ou la compression de fluides constitués d'une seule phase.

## Claims

1. Combustion process with capture of the carbon dioxide, in which at least the following steps are carried out:
a) an oxygen-rich flow is mixed with a carbon dioxide-rich flow to form a mixture,
b) a fuel is burnt with said mixture,
c) the combustion fumes are treated to condense the water and carry away sulphurous compounds, and
d) at least part of the treated fumes obtained in step c) are partially liquefied by compression at a pressure of between 40 and 70 bar absolute and by cooling to a temperature greater than 0°C in order to obtain partially liquefied fumes comprising at least 8% by volume of liquid,
e) the partially liquefied fumes obtained in step d) are compressed by means of at least one multiphase pump in order to obtain a compressed flow.

2. The process according to Claim 1, in which part of the treated fumes obtained in step c) are used to be mixed with the oxygen-rich flow in step a).

3. The process according to one of Claims 1 and 2, in which, in step d), the partial liquefaction of the treated fumes is achieved by at least compressing the fumes at a pressure of between 50 and 70 bars and by cooling the compressed fumes to a temperature of between 0°C and 40°C.

4. The process according to one of Claims 1 to 3, in which the following operations are carried out:
- part of the compressed flow obtained in step e) is expanded, then
- said flow part is recycled by adding said part of expanded flow to the partially liquefied fumes obtained in step c), prior to compression by the multiphase pump.

5. The process according to Claim 4, in which said part of compressed flow is cooled by heat exchange prior to carrying out the expansion.

6. The process according to one of Claims 1 to 5, in which the compressed fumes are injected into an underground reservoir.

7. The process according to Claim 6, in which the compressed fumes obtained in step e) are transported, then injected and trapped in an underground reservoir.

8. The process according to Claim 6, in which the compressed fumes obtained in step e) are transported, then injected into an underground reservoir of hydrocarbons in production in order to improve the recovery of hydrocarbons.

9. The process according to one of the preceding claims, in which the multiphase pump is a helico-axial rotodynamic pump, comprising at least one compression cell which is mounted on one same shaft and of which the geometry is suited for pumping mixtures of a gaseous phase and of at least one liquid phase.

10. The process according to one of Claims 1 to 9 in which the multiphase pump comprises at least one compression cell suited to pumping mixtures of a gaseous phase and of at least one liquid phase, associated with at least one compression cell conventionally used to pump or compress fluids consisting of one single phase.

## Patentansprüche

1. Verfahren zur Verbrennung mit Entfernung von Kohlendioxid, wobei mindestens die folgenden Schritte durchgeführt werden:
a) Mischen eines sauerstoffreichen Stroms mit einem kohlendioxidreichen Strom, um ein Gemisch zu bilden,
b) Verbrennen eines Brennstoffs mit dem Gemisch,
c) Behandeln der Rauchgase der Verbrennung, um Wasser zu kondensieren und schwefelhaltige Verbindungen mitzuführen, und
d) teilweises Verflüssigen mindestens eines Teils der behandelten Rauchgase, die in Schritt c) erhalten wurden, durch Verdichten bei einem Druck im Bereich zwischen 40 und 70 bar absolut und durch Abkühlen auf eine Temperatur größer als 0 °C, um teilweise verflüssigte Rauchgase zu erhalten, die mindestens 8 Vol.-% Flüssigkeit umfassen,
e) Verdichten der teilweise verflüssigten Rauchgase, die in Schritt d) erholten wurden, mittels mindestens einer Mehrphasenpumpe, um einen verdichteten Strom zu erhalten.

2. Verfahren nach Anspruch 1, wobei ein Teil der behandelten Rauchgase, die in Schritt c) erhalten wurden, verwendet wird, um mit dem sauerstoffreichen Strom in Schritt a) gemischt zu werden.

3. Verfahren nach einem der Ansprüche 1 und 2, wobei in Schritt d) die teilweise Verflüssigung der behandelten Rauchgase durch mindestens eine Verdichtung der Rauchgase bei einem Druck im Bereich zwischen 50 und 70 bar und durch eine Abkühlung der verdichteten Rauchgase auf eine Temperatur im Bereich zwischen 0 °C und 40 °C realisiert wird.

4. Verfahren nach einem der Ansprüche 1 bis 3, wobei die folgenden Arbeitsvorgänge durchgeführt werden:
- Entspannen eines Teils des verdichteten Stroms, der in Schritt e) erhalten wurde, dann
- Recyceln des Teils des Stroms, indem der Teil des entspannten Stroms zu den teilweise verflüssigten Rauchgasen zugefügt wird, die in Schritt c) erhalten wurden, von der Verdichtung durch die Mehrphasenpumpe.

5. Verfahren nach Anspruch 4, wobei der Teil des verdichteten Stroms vor der Durchführung der Entspannung durch Wärmeaustausch abgekühlt wird.

6. Verfahren nach einem der Ansprüche 1 bis 5, wobei die verdichteten Rauchgase in einen unterirdischen Tank injiziert werden.

7. Verfahren nach Anspruch 6, wobei die verdichteten Rauchgase, die in Schritt e) erhalten wurden transportiert, dann injiziert und in einem unterirdischen Tank sequestriert werden.

8. Verfahren nach Anspruch 6, wobei die verdichteten Rauchgase, die in Schritt e) erhalten wurden transportiert, dann in einem unterirdischen Tank mit Kohlenwasserstoffen in Produktion injiziert werden, um die Kohlenwasserstoffgewinnung zu verbessern.

9. Verfahren nach einem der vorhergehenden Ansprüche, wobei die Mehrphasenpumpe eine helico-axiale rotodynamische Pumpe ist, die mindestens eine Verdichtungszelle umfasst, die auf einer gleichen Achse angebracht ist, und deren Geometrie an das Pumpen von Gemischen aus einer Gasphase und mindestens einer Flüssigphase angepasst ist.

10. Verfahren nach einem der Ansprüche 1 bis 9, wobei die Mehrphasenpumpe mindestens eine Verdichtungszelle umfasst, die an das Pumpen von Gemischen aus einer Gasphase und mindestens einer Flüssigphase angepasst ist, in Verbindung mit mindestens einer Verdichtungszelle, die herkömmlicherweise zum Pumpen oder zum Verdichten von Fluiden verwendet wird, die aus einer einzigen Phase bestehen.
